# EUROPEAN PATENT APPLICATION

(11) **EP 4 243 108 A1**
(43) Date of publication of application: **13.09.2023**
(21) Application number: 22826798.5
(22) Date of filing: 24.05.2022
(51) Int. Cl.: H01M 4/04, H01M 4/133, H01M 4/1393, H01M 10/0525

(54) **NEGATIVE ELECTRODE SHEET AND PREPARATION METHOD THEREFOR, AND LITHIUM-ION BATTERY**

(30) Priority: 26.01.2022 CN 202210096693
(71) Applicant: Hengdian Group DMEGC Magnetics Co., Ltd., Dongyang, Zhejiang 322118 (CN)
(72) Inventor: WANG, Zhanzhou, Dongyang, Zhejiang 322118 (CN); JIANG, Yisheng, Dongyang, Zhejiang 322118 (CN); ZHANG, Haoyang, Dongyang, Zhejiang 322118 (CN)
(74) Representative: DehnsGermany Partnerschaft von Patentanwälten
(86) International application number: PCT/CN2022/094762
(87) International publication number: WO 2023/142319

(57) **Abstract**

The present disclosure provides an anode and a preparing method therefor, and a lithium ion battery. The method for preparing an anode includes: coating anode slurry on a surface of a current collector to obtain a current collector including an anode slurry layer, where the anode slurry includes a conductive agent, an anode active material, an adhesive and a solvent; and performing point discharge on the current collector including the anode slurry layer, to cause the anode active material and the conductive agent to arrange in direction of an electric field, and then drying to obtain the anode. By means of the above method, the conductivity, energy density and rate capability of a battery can be enhanced without increasing the cost of raw materials and formulations.

## Description

### Cross-Reference to Related Application

This application is based on Chinese Patent Application No. 202210096693.3, filed on January 26, 2022, which claims the benefit of priority to the Chinese Patent Application, which is incorporated by reference in its entirety herein.

### Technical Field

The present disclosure relates to the field of lithium ion battery preparing, and an anode a preparation method thereof, and a lithium ion battery.

### Background

Anode of a lithium ion battery determines the performance of the lithium ion battery. A graphite anode is a material that is most widely studied at present, and is large in reserve and low in cost; and the graphite anode has a regular layered structure, which may perform an deintercalation of lithium ions. Currently, graphene or a large number of carbon nanotubes are required to be added to enhance the rate capacity and conductivity of the battery. However, through such a way, production costs are increased, and the proportion of active substances is decreased, and finally resulting in low energy density.

In view of the above problem, it is required to develop a method for preparing an anode that can realize the battery to be with high conductivity and high energy density, and without increasing the cost of raw materials and formulations.

### Summary

The present disclosure mainly intended to provide an anode and a preparation method thereof, and a lithium ion battery, to resolve the problem that an anode prepared by a conventional method can't have good rate capability, excellent conductivity and high energy density at the same time.

In order to achieve the above objective, a first aspect of the present disclosure provides a method for preparing an anode. The method for preparing an anode includes: coating anode slurry on a surface of a current collector to obtain a current collector including an anode slurry layer, where the anode slurry includes a conductive agent, an anode active material, an adhesive and a solvent; and performing point discharge on the current collector including the anode slurry layer, to cause the anode active material and the conductive agent to arrange in direction of an electric field, and obtaining the anode after drying.

Further, during the process of performing point discharge, relative humidity of an environment ranges from 20 to 70%, a breakdown voltage ranges from 5000 to 18000V/cm, and a frequency ranges from 0.2 to 3Hz.

Further, during the process of performing point discharge, the relative humidity of the environment ranges from 35 to 60%, the breakdown voltage ranges from 8000 to 12000V/cm, and the frequency ranges from 0.5 to 2Hz.

Further, during the process of performing point discharge, a distance between a discharge point and the current collector including the anode slurry layer ranges from 0.5 to 10mm.

Further, the distance between the discharge point and the current collector including the anode slurry layer ranges from 0.5 to 7mm.

Further, the anode slurry includes a conductive agent, an anode active material, an adhesive, a thickening agent, and a solvent; and the anode active material is selected from one or more of a group consisting of natural graphite, artificial graphite, and composite graphite.

Further, a weight ratio of the conductive agent, the anode active material, the adhesive, the thickening agent to the solvent is (0.5-5):(90-98):(0.4-3):(0.5-3):(0.8-1.5).

Further, a temperature of the drying processing ranges from 40 to 80°C, and a time of the drying processing ranges from 0.5 to 5min.

A second aspect of this disclosure further provides an anode, including a current collector and an anode slurry layer disposed on the current collector, where the anode is prepared by means of the method for preparing an anode.

A third aspect of this disclosure further provides a lithium ion battery, the lithium ion battery includes the anode.

Through the technical solution of the present disclosure, the anode slurry is coated on the surface of the current collector to form the anode slurry layer on a surface of the current collector. Since both the metal current collector and anode active material have good conductivity, so that compared with other electric field effect, the conductive agent and the anode active material in the anode slurry layer can form a special arrangement structure by performing point discharge on the current collector and anode active material. The structure can be cured and shaped after drying. By means of the method mentioned above, the conductivity, energy density and rate capability of a lithium ion battery can be enhanced without increasing the cost of raw materials and formulations.

### Brief Description of the Drawings

The drawings, which form a part of this disclosure, are used to provide a further understanding of the present disclosure. The exemplary embodiments of the present disclosure and the description thereof are used to explain the present disclosure, but do not constitute improper limitations to the present disclosure. In the drawings:
Fig. 1 is a schematic cross-sectional view of an anode with coating an anode slurry.
Fig. 2 is a schematic cross-sectional view of an anode coated in an electric field.

The above accompanying drawings include the following reference numerals:
10. Conductive agent; 20. Anode active material; 30. Adhesive; 40. Conductive current collector; 50. Point discharge apparatus.

### Detailed Description of the Embodiments

It is to be noted that the embodiments in this disclosure and the features in the embodiments may be combined with one another without conflict. The present disclosure will be described below in detail with reference to the embodiments.

As described in the background, there is a problem that an anode prepared by a conventional method can't have good rate capability, excellent conductivity and high energy density at the same time. In order to resolve the above technical problem, this disclosure provides a method for preparing an anode. The method for preparing an anode includes: coating anode slurry on a surface of a current collector to obtain a current collector including an anode slurry layer, where the anode slurry includes a conductive agent, an anode active material, an adhesive and a solvent; and performing point discharge on the current collector including the anode slurry layer, to cause the anode active material and the conductive agent to arrange in direction of an electric field, and then drying to obtain the anode.

The anode slurry is coated on the surface of the current collector to form the anode slurry layer on a surface of the current collector. Since both the metal current collector and anode active material have good conductivity, so that compared with other electric field effect, the conductive agent and the anode active material in the anode slurry layer can form a special arrangement structure by performing point discharge on the current collector and anode active material. The structure can be cured and shaped after drying. By means of the method mentioned above, the conductivity, energy density and rate capability of a lithium ion battery can be enhanced without increasing the cost of raw materials and formulations.

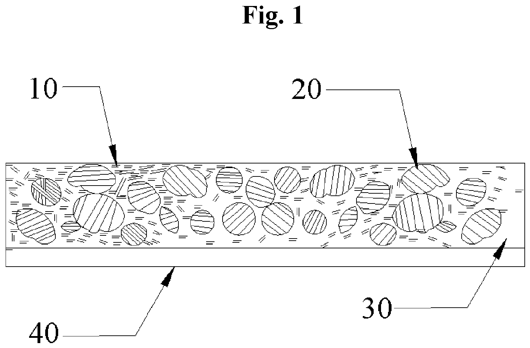

Fig. 1 is a schematic cross-sectional view of an anode with coating an anode slurry. The anode slurry is obtained by mixing the conductive agent 10 (small particle conductive carbon black), the anode active material 20 (natural graphite, artificial graphite, or composite graphite), the adhesive 30 and the solvent, and is then uniformly coated on a surface of the conductive current collector 40. The conductive current collector 40 carries the slurry to enter an oven of a coating machine for baking and shaping, and the solvent is removed at the same time. It can be seen from Fig. 1 that conductive substances are disorderly and unsystematic among active substances before applying an electric field, and graphite particles with a layered structure are also irregularly arranged before electric shock, so that electronic transmission capability is relatively weak.

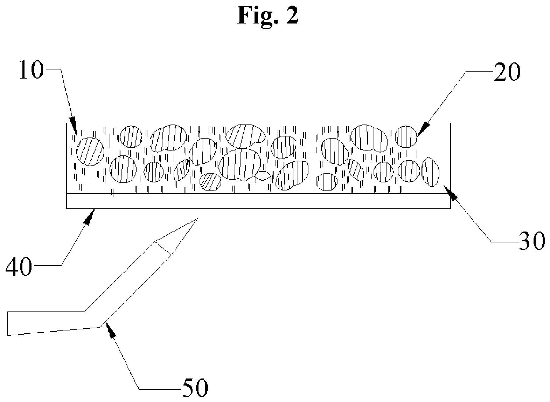

Fig. 2 is a schematic cross-sectional view of an anode coated in an electric field. The anode slurry is obtained by mixing the conductive agent 10 (small particle conductive carbon black), the anode active material 20 (natural graphite, artificial graphite, or composite graphite), the adhesive 30, an optional thickening agent and an organic solvent, and then the anode slurry is uniformly coated on the surface of the conductive current collector 40. A discharge probe may be disposed under the conductive current collector 40. The point of the probe is aligned with the current collector, and the other pointed end is connected to a power generation apparatus. A gap between the point of the probe and the current collector may be adjusted according to actual requirements, so that to protect the current collector coated with the slurry from being scratched by a point discharge apparatus 50. The point discharge apparatus 50 can be disposed around the conductive current collector 40, or may be disposed in the middle of the conductive current collector 40. While the coating machine runs, conductive components in the slurry on the surface of the current collector turn as the electric field is applied and are arranged in a direction of electric field. The slurry well arranged on the current collector leaves the electric field and then enters the oven for baking and shaping. Through such processing, the conductivity of the anode is obviously enhanced, and rate capability after the battery is assembled is enhanced accordingly.

Through point discharge, a particular conductive structure can be formed in the anode slurry layer. In a preferred embodiment, during the process of performing point discharge, relative humidity of an environment ranges from 20 to 70%, a breakdown voltage ranges from 5000 to 18000V/cm, and a frequency ranges from 0.2 to 3Hz. The breakdown voltage and the frequency during point discharge include, but are not limited to, the above ranges. When a distance between the discharge point and the anode slurry layer is certain, arrangement regularity of the conductive structure in the anode slurry layer is further improved by limiting the breakdown voltage and the frequency within the above ranges. Therefore, the conductivity, energy density and rate capability of the anode can be further enhanced. The relative humidity of the environment can be selected as 20%, 30%, 40%, 50%, 60%, or 70%. The breakdown voltage ranges from 5000 to 18000V/cm, and the frequency ranges from 0.2 to 3Hz. In order to further improve the overall performance of the anode, more preferably, during point discharge, the relative humidity of the environment ranges from 35 to 60%, the breakdown voltage ranges from 8000 to 12000V/cm, and the frequency ranges from 0.5 to 2Hz.

The distance between the discharge point and the current collector including the anode slurry layer also affects the conductive structure obtained during point discharge. In a preferred embodiment, during point discharge, the distance between the discharge point and the current collector including the anode slurry layer ranges from 0.5 to 10mm. The distance between the discharge point and the current collector including the anode slurry layer includes, but is not limited to, the above range. A numerical value of the breakdown voltage is increased by limiting the distance within the above range. Therefore, the efficiency of preparing the anode having the particular conductive structure can be enhanced. More preferably, the distance between the discharge point and the current collector including the anode slurry layer ranges from 0.5 to 7 mm.

In a preferred embodiment, the anode slurry includes the conductive agent, the anode active material, the adhesive, a thickening agent, and the solvent. The anode active material is selected from one or more of a group consisting of natural graphite, artificial graphite, and composite graphite. More preferably, a weight ratio of the conductive agent, the anode active material, the adhesive, the thickening agent to the solvent is (0.5-5):(90-98):(0.4-3):(0.5-3):(0.8-1.5). Compared with other value ranges, by limiting the weight ratio of the conductive agent, the anode active material, the adhesive, the thickening agent, and the solvent within the above range, the viscosity of the anode slurry is controlled within an appropriate coating range, thereby improving processing performance. In addition, the conductivity of the anode is enhanced, so that the energy density and rate capability of the lithium ion battery are improved.

In a preferred embodiment, a temperature of the drying processing ranges from 40 to 80°C, and a time of the drying processing ranges from 0.5 to 5min. The temperature includes, but is not limited to, the above range. By limiting the temperature of the drying processing within the above range, the volatilization rate of the solvent is controlled within an appropriate range, so that the surface and internal of the anode slurry layer can be dried more uniformly and fully. In addition, adverse effects to the internal structure due to drying can be inhibited. The temperature of the drying processing can be selected as 40, 50, 60, 70, or 80°C, and the time of the drying processing can be selected as 0.5, 1, 2, 3, 4, or 5min.

A second aspect of this disclosure further provides an anode, including a current collector and an anode slurry layer disposed on the current collector. The anode is prepared by the method for preparing an anode provided in this disclosure.

The anode slurry is coated on the surface of the current collector to form the anode slurry layer on a surface of the current collector. Since the metal current collector and anode active material have good conductivity, compared with other electric field actions, the conductive agent and the anode active material in the anode slurry layer can form a special arrangement structure by performing point discharge on the current collector and anode active material. The structure can be cured and shaped after drying. The anode prepared by using the above method can have high conductivity, energy density and rate capability at the same time without increasing the cost of preparing raw materials and formulations.

A third aspect of this disclosure further provides a lithium ion battery. The lithium ion battery includes the anode provided in this disclosure. The anode provided in this disclosure includes the conductive structure regularly arranged in a particular direction, so that the lithium ion battery can have high conductivity, energy density and rate capability without increasing costs.

This disclosure is further described in detail below with reference to specific embodiments, and the embodiments cannot be construed as limiting the scope of protection claimed in this disclosure.

### Embodiment 1

### Preparation of a cathode:

A weight ratio of lithium iron phosphate, the conductive agent (a weight ratio of carbon black to carbon nanotubes is 1:1), to the adhesive (polyvinylidene fluoride) in raw materials is 94:3:3. Firstly, the polyvinylidene fluoride was mixed with NMP to make an even glue solution, and then 3% conductive agent was added to the even glue solution for mixing. The main lithium iron phosphate material was added twice for mixing. The viscosity of the slurry was adjusted to 5000mPa•s, then it was discharged and sieved, and then was transferred to the coating machine to coat the current collector. The cathode was obtained after the solvent is removed.

### Preparation of an anode:

Graphite, conductive carbon black, the adhesive (styrene butadiene rubber) and the thickening agent (sodium carboxymethyl cellulose) were mixed in a weight ratio of 95:2:1:1, to obtain the anode slurry, and then the anode slurry was discharged and sieved, and then was transferred to the coating machine to coat the current collector.

During the processing of coating anode slurry, impulse shock was applied to the current collector point discharge, to cause conductive particles in the undried slurry on the current collector to achieve orientation arrangement, and the anode is obtained after drying and shaping. During processing of performing point discharge, the relative humidity of the environment was 50%, the breakdown voltage was 10000V/cm, the frequency was 1Hz, and the temperature of drying was 45°C.

The rate capacity of the battery achieved 5C at room temperature.

### Comparative example 1

A difference between this embodiment and Embodiment 1 is shown as follows:
A same anode slurry formulation was used, but through tests, the highest rate capacity of the battery assembled by the anode without undergoing point discharge was only 2C.

It can be seen by comparison that, when the anode prepared by using the method provided in this disclosure to assemble the lithium ion battery, the rapid charging efficiency of the battery can be effectively enhanced.

### Embodiment 2

A difference between this embodiment and Embodiment 1 is shown as follows:
During the process of performing point discharge, the relative humidity of the environment was 20%, the breakdown voltage was 18000V/cm, and the frequency was 3Hz.

The rate capacity of the battery achieved 3C at room temperature.

### Embodiment 3

A difference between this embodiment and Embodiment 1 is shown as follows:

During the process of performing point discharge, the relative humidity of the environment was 70%, the breakdown voltage was 5000V/cm, and the frequency was 0.2Hz.

The rate capacity of the battery achieved 3C at room temperature.

### Embodiment 4

A difference between this embodiment and Embodiment 1 is shown as follows:

During the process of performing point discharge, the relative humidity of the environment was 25%, the breakdown voltage was 7000V/cm, and the frequency was 2.5Hz.

The rate capacity of the battery achieved 2C at room temperature.

### Embodiment 5

A difference between this embodiment and Embodiment 1 is shown as follows:

During the process of performing point discharge, the relative humidity of the environment was 20%, the breakdown voltage was 4000V/cm, and the frequency was 0.1Hz.

The rate capacity of the battery achieved 2C at room temperature.

### Embodiment 6

A difference between this embodiment and Embodiment 1 is shown as follows:
During the process of performing point discharge, the relative humidity of the environment was 35%, the breakdown voltage was 12000V/cm, and the frequency was 0.5Hz.

The rate capacity of the battery may achieved 4C at room temperature.

### Embodiment 7

A difference between this embodiment and Embodiment 1 is shown as follows:
During the process of performing point discharge, the relative humidity of the environment was 60%, the breakdown voltage was 8000V/cm, and the frequency was 2Hz.

The rate capacity of the battery may achieved 4C at room temperature.

### Embodiment 8

A difference between this embodiment and Embodiment 5 is shown as follows: The distance between the discharge point and the current collector including the anode slurry layer was 0.5mm.

The rate capacity of the battery may achieved 3C at room temperature.

### Embodiment 9

A difference between this embodiment and Embodiment 5 is shown as follows: The distance between the discharge point and the current collector including the anode slurry layer was 10mm.

The rate capacity of the battery may achieved 1.5C at room temperature.

### Embodiment 10

A difference between this embodiment and Embodiment 5 is shown as follows: The distance between the discharge point and the current collector including the anode slurry layer was 5mm.

The rate capacity of the battery may achieved 2C at room temperature.

### Embodiment 11

A difference between this embodiment and Embodiment 5 is shown as follows: The distance between the discharge point and the current collector including the anode slurry layer was 15mm.

The rate capacity of the battery may achieved 1C at room temperature.

From the above description, it can be seen that, the embodiments of the present disclosure achieve the following technical effects: The rate capacity of the battery assembled by the anode oriented by the electric field may achieve 3C to 4C. However, the highest rate capacity of the battery assembled by the anode using the same anode slurry formula and without undergoing point discharge is only 2C. Through comparison, it can be seen that, when the anode prepared by using the method provided in this disclosure is used to assemble the battery, the rapid charging efficiency of the battery may be effectively enhanced.

It is to be noted that terms "first", "second" and the like in the description and claims of this disclosure are used for distinguishing similar objects rather than describing a specific sequence or a precedence order. It should be understood that the terms used in such a way may be exchanged where appropriate, in order that the implementations of this disclosure described here can be implemented in an order other than those described herein.

The above are only the preferred embodiments of the present disclosure and are not intended to limit the present disclosure. For those skilled in the art, the present disclosure may have various modifications and variations. Any modifications, equivalent replacements, improvements and the like made within the spirit and principle of the present disclosure all fall within the scope of protection of the present disclosure.

## Claims

1. A method for preparing an anode, wherein the method for preparing an anode comprising:
coating an anode slurry on a surface of a current collector to obtain a current collector including an anode slurry layer, wherein the anode slurry including a conductive agent, an anode active material, an adhesive and a solvent; and
performing point discharge on the current collector including the anode slurry layer, to cause the anode active material and the conductive agent to arrange in direction of an electric field, and then drying to obtain the anode.

2. The method for preparing an anode according to claim 1, wherein during the process of performing the point discharge, relative humidity of an environment ranges from 20 to 70%, a breakdown voltage ranges from 5000 to 18000V/cm, and a frequency ranges from 0.2 to 3Hz.

3. The method for preparing an anode according to claim 2, wherein during the process of performing the point discharge, the relative humidity of the environment ranges from 35 to 60%, the breakdown voltage ranges from 8000 to 12000V/cm, and the frequency ranges from 0.5 to 2Hz.

4. The method for preparing an anode according to claim 2 or 3, wherein during the process of performing the point discharge, a distance between a discharge point and the current collector including the anode slurry layer ranges from 0.5 to 10mm.

5. The method for preparing an anode according to claim 4, wherein the distance between the discharge point and the current collector including the anode slurry layer ranges from 0.5 to 7mm.

6. The method for preparing an anode according to any one of claims 1 to 5, wherein the anode slurry comprising a conductive agent, an anode active material, an adhesive, a thickening agent, and a solvent; and the anode active material is selected from one or more of a group consisting of natural graphite, artificial graphite, and composite graphite.

7. The method for preparing an anode according to claim 6, wherein a weight ratio of the conductive agent, the anode active material, the adhesive, the thickening agent to the solvent is (0.5-5):(90-98):(0.4-3):(0.5-3):(0.8-1.5).

8. The method for preparing an anode according to claim 6, wherein a temperature of the drying processing ranges from 40 to 80°C, and a time of the drying processing ranges from 0.5 to 5min.

9. An anode, comprising a current collector and an anode slurry layer disposed on the current collector, wherein the anode is prepared by means of the method for preparing an anode according to any one of claims 1 to 8.

10. A lithium ion battery, comprising the anode according to claim 9.
